(19) Europäisches Patentamt
European Patent Office
Office européen des brevets

(11) **EP 4 256 303 B1**

(12) **EUROPÄISCHE PATENTSCHRIFT**

(45) Veröffentlichungstag und Bekanntmachung des Hinweises auf die Patenterteilung:
**28.05.2025 Patentblatt 2025/22**

(21) Anmeldenummer: **21824302.0**

(22) Anmeldetag: **26.11.2021**

(51) Internationale Patentklassifikation (IPC):
**G01N 9/00** *(2006.01)* **G01F 1/84** *(2006.01)*
**G01F 15/18** *(2006.01)*

(52) Gemeinsame Patentklassifikation (CPC):
**G01N 9/002;** G01F 1/8413; G01F 1/8436;
G01F 1/8477; G01F 15/185; G01N 2009/006

(86) Internationale Anmeldenummer:
**PCT/EP2021/083172**

(87) Internationale Veröffentlichungsnummer:
**WO 2022/117457 (09.06.2022 Gazette 2022/23)**

(54) **VERFAHREN ZUM BESTIMMEN EINES DICHTEMESSWERTS UND CORIOLIS-MASSEDURCHFLUSSMESSUMFORMER ZUR DURCHFÜHRUNG DES VERFAHRENS**

METHOD OF DETERMINING A DENSITY VALUE AND CORIOLIS MASS FLOW TRANSDUCER FOR CARRYING OUT THE METHOD

PROCÉDÉ DE DÉTERMINATION D'UNE VALEUR DE DENSITÉ ET DISPOSITIF POUR LA MISE EN OEUVRE DU PROCÉDÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **01.12.2020 DE 102020131769**

(43) Veröffentlichungstag der Anmeldung:
**11.10.2023 Patentblatt 2023/41**

(73) Patentinhaber: **Endress+Hauser Flowtec AG 4153 Reinach (CH)**

(72) Erfinder:
• ZHU, Hao
85354 Freising (DE)
• ECKERT, Gerhard
79639 Grenzach-Wyhlen (DE)

(74) Vertreter: **Endress + Hauser Group Services (Deutschland) AG+Co. KG Colmarer Straße 6 79576 Weil am Rhein (DE)**

(56) Entgegenhaltungen:
WO-A1-2020/088837  DE-A1- 102016 007 905
DE-A1- 102016 125 616  DE-A1- 102018 112 002
DE-A1- 102018 133 318

**Beschreibung**

Die Erfindung betrifft ein Verfahren zum Bestimmen eines Dichtemesswerts eines Mediums mittels eines in einer Rohrleitung montierten Coriolis-Massedurchflussmessumformers mit zwei Oszillatoren, sowie einen solchen Coriolis-Massedurchflussmessumformer zur Montage in einer Rohrleitung und zur Durchführung des erfindungsgemäßen Verfahrens. Gattungsgemäße Durchflussmessgeräte sind beispielsweise offenbart in DE 10 2015 104 931 A1.

Weiterhin offenbart DE 10 2018 133 318 A1 einen Durchflussmessumformer vom Vibrationstyp mit zwei gebogenen, parallelen Messrohrpaaren wobei die Teildurchflussraten durch die beiden Messrohrpaare separat erfasst und zu einer Geamtdurchflussrate addiert werden.

DE 10 2016 007 905 A1 offenbart ein Verfahren zum Betreiben eines Messaufnehmers vom Vibrationstyp mit mindestens zwei Oszillatoren die jeweils durch ein Paar von Messrohren gebildet sind, wobei die Paare von Messrohren strömungstechnisch parallel angeordnet sind, wobei die beiden Oszillatoren voneinander unabhängige Oszillatorschwingungen mit voneinander verschiedenen Eigenfrequenzen für einander entsprechenden Schwingungsmoden aufweisen, wobei das Verfahren das Verhältnis zwischen Messergebnissen der beiden Oszillatoren für eine Messgröße auswertet und bei Abweichungen von einem erwarteten Verhältnis ein Signal ausgibt.

DE 10 2016 125 616 A1 offenbart einen Durchflussmessumformer vom Vibrationstyp mit zwei gebogenen, parallelen Messrohrpaaren, wobei die Messrohre eines Messrohrpaars jeweils mit einem Messrohr des anderen Messrohrpaars in einer Ebene liegen, und mit dem Messrohr des anderen Messrohrpaars in der anderen Ebene im Scheitelbereich des Messrohrbiogens in der Messrohrmitte gekoppelt sind. Die rsultierende diagonale Kopplung führt dazu dass die Messrohre der beiden Messrohrpaare mit gleicher Frequenz und gegenphasig schwingen.

WO 2020 / 088 837 A1 offenbart einen Durchflussmessumformer vom Vibrationstyp mit zwei gebogenen, parallelen Messrohrpaaren, mit unabhängiger Durchflussmessung in den beiden Messrohrpaaren, wobei die Glaubwürdigkeit der jeweiligen Messergebnisse überprüft wird und im Falle von Zweifeln, die zweifelhaften Messwerte eines Messrohrpaars durch Ersatzwerte auf Basis der Messwerte des anderen Messrohrpaars ersetzt werden.

DE 10 2018 112 002 A1 offenbart einen Messaufnehmer vom Vibrationstyp zum Bestimmen der Dichte, des Massedurchflusses und/ oder der Viskosität eines fließfähigen Mediums. Er umfasst: einen Oszillator, der mindestens ein schwingfähiges Messrohr zum Führen des Mediums aufweist, und der mindestens eine Schwingungsmode aufweist deren Eigenfrequenz von der Dichte des Mediums abhängt, einen Erreger zum Anregen der Schwingungsmode; mindestens einen Schwingungssensor zum Erfassen von Schwingungen des Oszillators; und eine Betriebs- und Auswerteschaltung, die dazu eingerichtet ist, den Erreger mit einem Erregersignal zu beaufschlagen, Signale des Schwingungssensors zu erfassen, anhand der Signale des Schwingungssensors aktuelle Werte der Eigenfrequenz des Oszillators sowie Fluktuationen der Eigenfrequenz zu ermitteln, und einen Dichtefluktuationen des Mediums charakterisierenden Wert zu bestimmen, wobei der Wert von einer Funktion abhängt, die zur Fluktuation der Eigenfrequenz proportional ist und eine Eigenfrequenzabhängige Normierung aufweist.

Die gattungsgemäßen Messumformer werden werksseitig kalibriert und im kalibrierten Zustand in einer Messstelle eingebaut. Durch diesen Einbau können mechanische Spannungen auf den Messumformer wirken, so dass die Oszillatoren minimal verstimmt werden, was sich insbesondere auf die frequenzabhängige Dichtemessung auswirkt.

Es ist die Aufgabe der vorliegenden Erfindung, hier Abhilfe zu schaffen.

Das erfindungsgemäße Verfahren dient zum Bestimmen eines Dichtemesswerts eines Mediums mittels eines in einer Rohrleitung montierten Coriolis-Massedurchflussmessumformers, welcher mindestens zwei Oszillatoren aufweist, die jeweils mindestens zwei gegeneinander schwingende Messrohre umfassen, wobei die Messrohre eines ersten der Oszillatoren oberhalb der Messrohre eines zweiten der Oszillatoren verlaufen, wobei die Messrohre strömungstechnisch parallel angeordnet sind und einlassseitig und auslassseitig in Sammler münden, wobei durch die Montage des Messumformers in der Rohrleitung mechanische Spannungen verursacht sind, welche über die Sammler die Oszillatoren beeinflussen, wobei das Medium in den Messrohren geführt wird, wobei das Verfahren die folgenden Schritte umfasst:

Anregen jeweils mindestens einer Schwingungsmode des ersten Oszillators und des zweiten Oszillators;

Ermitteln der jeweiligen Eigenfrequenz der angeregten Schwingungsmoden;

Ermitteln jeweils eines vorläufigen Dichtemesswerts auf Basis der jeweiligen Eigenfrequenzen;

Ermitteln einer Abweichung zwischen den vorläufigen Dichtemesswerten;

Ermitteln eines korrigierten Dichtemesswerts mittels eines Modells, welches auf Basis der Abweichung den Einfluss der mechanischen Spannungen auf die Dichtemessung ermittelt und korrigiert.

Bei eingehenderen Untersuchungen zu den Effekten der mechanischen Spannungen durch den Einbau des Messumformers in eine Messstelle haben die Erfinder der vorliegenden Erfindung festgestellt, dass sich die mechanischen Spannungen unterschiedlich auf die beiden Oszillatoren auswirken, d.h. sie werden unterschiedlich stark verstimmt, das bewirkt, dass sie für ein sie durchströmendes Medium unterschiedliche vorläufige Dichtemesswerte hervorbringen. Insofern als die Abweichungen der beiden vorläufigen Dichtemesswerte voneinander mit dem Absolutwert der Verstimmungen korreliert, kann damit erfindungsgemäß das Ausmaß der spannungsabhängigen Verstimmungen ermittelt und korrigiert werden.

In einer Weiterbildung der Erfindung modelliert das Modell den Einfluss der mechanischen Spannungen in Form von Biegemomenten.

In einer Weiterbildung der Erfindung modelliert das Modell den Einfluss der Biegemomente auf die Oszillatoren unter der Annahme, dass die Biegemomente Achsen aufweisen, die senkrecht zu einer Längsachse des Messumformers verlaufen, und die in Richtung der Schwingungen der Oszillatoren verlaufen.

In den meisten Messstellen sind die Messumformer so angeordnet, dass die Messrohre in einer horizontalen Ebene schwingen. D.h. gemäß der obigen Definition, dass auch die Achse der Biegemomente horizontal verläuft, ist insbesondere dann zutreffend, wenn Einflüsse der Schwerkraft durch Toleranzen bei der Abstützung der Rohrleitung zu durchhängenden oder zu stark abgestützte Rohrleitungsabschnitten führen, an welche der Messumformer angeschlossen ist. Dies durfte die häufigste Ursache von einbaubedingten Verstimmungen sein, die mit dem erfindungsgemäßen Verfahren korrigiert werden.

In einer Weiterbildung der Erfindung wird ein effektiver Dichtemesswert als Mittelwert bzw. mit der jeweiligen Durchflussrate durch die Messrohre der Oszillatoren gewichteter Mittelwert der vorläufigen Dichtemesswerte ermittelt, wobei der korrigierte Dichtemesswert auf Basis des effektiven Dichtemesswerts und eines Korrekturterms ermittelt wird, der auf Basis der Abweichung ermittelt wird.

In einer Weiterbildung der Erfindung wird der korrigierte Dichtemesswert auf Basis beider vorläufiger Dichtewerte und ihnen jeweils zugeordneten Korrekturtermen ermittelt, die auf Basis der Abweichung ermittelt werden.

In einer Weiterbildung der Erfindung umfasst mindestens ein Korrekturterm ein Polynom der Abweichung, insbesondere ein Polynom ersten oder zweiten Grades.

In einer Weiterbildung der Erfindung wird mindestens ein Korrekturterm zum effektiven Dichtemesswert addiert.

In einer Weiterbildung der Erfindung wird überprüft, ob das Medium einphasig ist, wobei der Mittels des Modells korrigierte Dichtemesswert nur für einphasige Medien bestimmt wird.

In einer Weiterbildung der Erfindung wird jeweils die erste Biegeschwingungsmode der Oszillatoren angeregt, wobei die vorläufigen Dichtemesswerte auf Basis der Eigenfrequenzen dieser Biegeschwingungsmoden bestimmt werden.

In einer Weiterbildung der Erfindung weicht der korrigierte Dichtemesswert um nicht mehr als 0,5 kg/m$^3$, insbesondere nicht mehr als 0,3 kg/m$^3$, insbesondere nicht mehr als 0,2 kg/m$^3$ von der tatsächlichen Dichte des Mediums ab.

Der erfindungsgemäße Coriolis-Massedurchflussmessumformer zur Montage in eine Rohrleitung, umfasst: mindestens zwei Oszillatoren, die jeweils mindestens zwei gegeneinander schwingfähige Messrohre umfassen, wobei im eingebauten Zustand die Messrohre eines ersten der Oszillatoren oberhalb der Messrohre eines zweiten der Oszillatoren verlaufen, wobei die Messrohre strömungstechnisch parallel angeordnet sind und einlassseitig und auslassseitig in Sammler münden, wobei die Montage des Messumformers in der Rohrleitung mechanische Spannungen verursachen kann, welche über die Sammler die Oszillatoren beeinflussen, wobei Messrohre zum Führen eines Mediums dienen, dessen Dichte mit dem Coriolis-Massedurchflussmessumformer zu bestimmen ist, wobei der Coriolis-Massedurchflussmessumformer weiterhin eine Mess- und Betriebsschaltung aufweist, die dazu eingerichtet ist das Verfahren nach einem der vorhergehenden Ansprüche mit dem Coriolis-Massedurchflussmessumformer durchzuführen.

Die Erfindung wird nun anhand der in den Zeichnungen dargestellten Ausführungsbeispiele näher erläutert. Es zeigt:

Fig 1: eine exemplarische Spannungsverteilung in einem Messumformer;

Fig. 2: ein Diagramm von vorläufigen und korrigierten Dichtemesswerten bei veränderlichen mechanischen Spannungen;

Fig. 3: Flussdiagramm eines Ausführungsbeispiels des Erfindungsgemäßen Verfahrens; und

Fig. 4: ein Ausführungsbeispiel eines erfindungsgemäßen Messumformers.

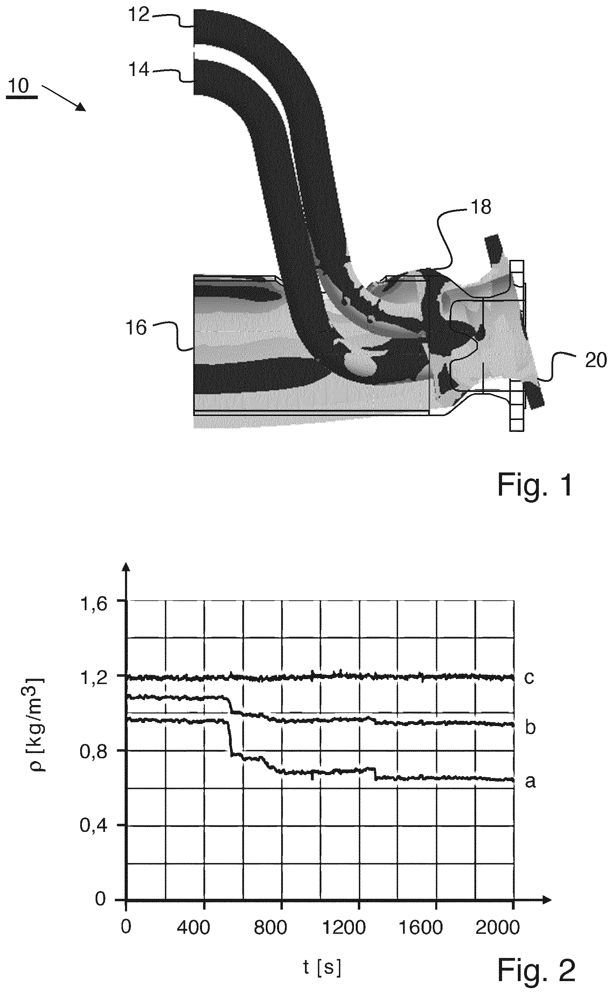

Fig. 1 zeigt exemplarische Simulationsergebnisse zu mechanischen Spannungen in einem gattungsgemäßen Messumformers für eine Einbausituation ein einer Rohrleitung, wenn durch Toleranzen in der Unterstützung der Rohrleitung Biegemomente in den Messumformer 10 eingeleitet werden. In Fig.1 ist nur ein Viertel des Messumformers 10 dargestellt, wobei davon auszugehen ist, dass die mechanischen Spannungen in der nicht dargestellten Teilen im wesentlichen spiegelsymmetrisch zur Spannungsverteilung im dargestellten Viertel bezüglich einer Querebene und einer Längsebene des Messumformers ausgebildet sind. In der Darstellung der Spannungen kommt es nicht auf quantitative Einzelheiten an. Es ist lediglich zu beachten, dass in hell dargestellten Zonen einer Komponente größere mechanische Spannungen auftreten als in dunkel dargestellten Zonen der Komponente.

Der Messumformer 10 umfasst einen äußeren Oszillator 12 mit zwei parallel geführten, gebogenen Messrohren, und einen inneren Oszillator 14 mit zwei parallel geführten, gebogenen Messrohren, wobei die Messrohre einlassseitig und auslassseitig jeweils in einen Sammler 18 münden, der einen Flansch 20 zur Montage des Messumformers 10 in eine Rohrleitung trägt. Die beiden Sammler 18 sind durch ein steifes Trägerrohr 16 miteinander verbunden.

Im vorliegenden Zusammenhang ist lediglich zu beachten, dass die eingeleiteten mechanischen Spannungen an den Messrohren des äußeren Oszillators 12 zu einem ausgedehnteren Bereich mit erhöhten mechanischen Spannungen führt als an den Messrohren des inneren Oszillators 14, wie sich unmittelbar durch einen Vergleich der hell dargestellten Bereiche ergibt. Demnach sind für den äußeren Oszillator 12 stärkere spannungsabhängige Verstimmungen zu erwarten als für den inneren Oszillator 14.

Diese Erwartung wird durch die Messergebnisse in Fig. 2 bestätigt, welche Dichtemesswerte während des Einbaus eines Massedurchflussmessumformers in eine Rohrleitung zeigt, wobei mit zunehmender Zeit die eingeleiteten Spannungen größer wurden. Der Messumformer war mit Luft unter Normalbedingungen gefüllt, es musste also eine Dichte von etwa 1,2 kg/m$^3$ gemessen werden.

Die Kurve (a) zeigt vorläufige Dichtemesswerte des äußeren Oszillators, während die Kurve (b) die vorläufigen Dichtemesswerte des inneren Oszillators zeigt. Erwartungsgemäß weichen die Dichtungsmesswerte des äußeren Oszillators stärker vom Sollwert ab als jene des inneren Oszillators.

Kurve (c) zeigt schließlich einen mit dem erfindungsgemäßen Verfahren korrigierten Dichtemesswert, der zufriedenstellend mit dem Sollwert übereinstimmt.

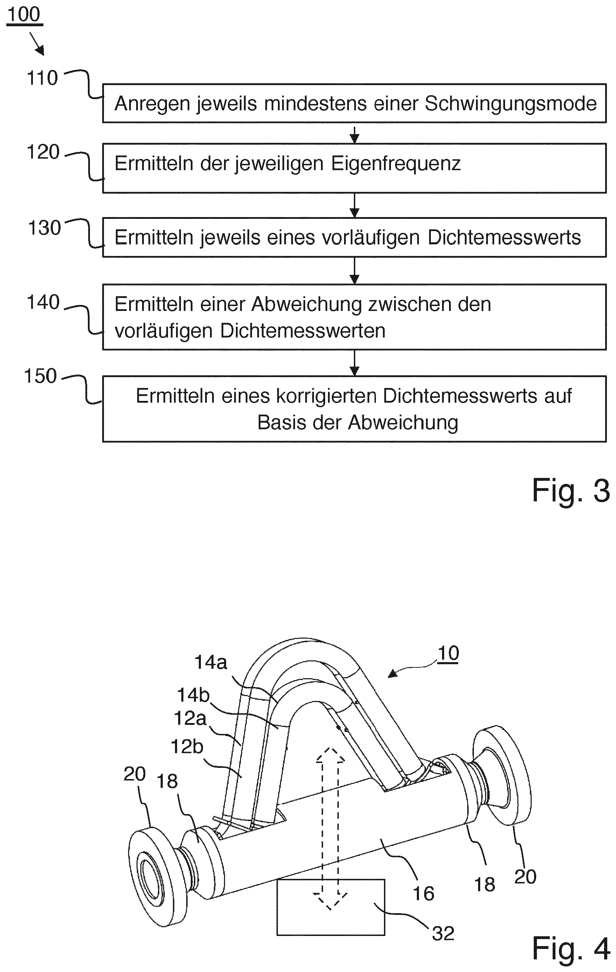

Das erfindungsgemäße Verfahren wird nun anhand eines in Fig. 3 dargestellten Flussdiagramms eines Ausführungsbeispiels näher erläutert. Das Verfahren 100 beginnt Anregen jeweils mindestens einer Schwingungsmode des ersten Oszillators und des zweiten Oszillators (110), wobei in aller Regel die Biegeschwingungsgrundmode angeregt wird, also jene Mode, in welcher die angeregte Mode keine Schwingungsknoten aufweist, und welche die tiefste Eigenfrequenz aller Schwingungsmoden des jeweiligen Oszillators aufweist. In einem zweiten Schritt erfolgt dann das Ermitteln der jeweiligen Eigenfrequenz der angeregten Schwingungsmoden (120). Es folgt dann das Ermitteln jeweils eines vorläufigen Dichtemesswerts (130) auf Basis der jeweiligen Eigenfrequenzen. Für einen spannungsfrei eingebauten Messumformer sollten die beiden vorläufigen Dichtemesswerte im Wesentlichen übereinstimmen. Wenn aber Abweichungen vorliegen und ausgeschlossen werden kann, dass diese Abweichungen andere Ursachen wie beispielsweise eine Gasbeladung eines flüssigen Mediums haben, dann ist eine Abweichung indiziell für einen Einfluss mechanischer Spannungen auf die Dichtemessung. Es erfolgt daher in einem nächsten Schritt das Ermitteln einer Abweichung zwischen den vorläufigen Dichtemesswerten (140). Auf dieser Basis erfolgt schließlich das Ermitteln eines korrigierten Dichtemesswerts (150) mittels eines Modells, welches auf Basis der Abweichung den Einfluss der mechanischen Spannungen auf die Dichtemessung ermittelt und korrigiert. Allgemein kann die Korrekturfunktion ein Polynom in der Differenz der Dichtemesswerte sein, wobei bereits mit einer linearen Funktion der Abweichung oder einem Polynom zweiten Grades eine hinreichende Messgenauigkeit erreicht werden kann. Im Folgenden wird die Vorgehensweise mit linearen Termen erläutert, sie kann aber entsprechend mit Polynomen verwendet werden.

Zunächst kann ein korrigierter Dichteteilmesswert für jeden Oszillator ermittelt werden, gemäß

$$\rho_{\text{corr,i}} = \rho_{\text{vorl,i}} + a_i \cdot \rho_{\text{diff}} + b_i,$$

wobei i = 1, 2 ein Index für den ersten bzw. zweiten Oszillator ist und $\rho_{\text{vorl,i}}$ den vorläufigen Dichtemesswert des jeweiligen Oszillators bezeichnet, wobei $a_i$ und $b_i$ oszillatorspezifische Koeffizienten sind, und wobei $\rho_{\text{diff}}$ die Abweichung zwischen den vorläufigen Dichtemesswerten ist. Die resultierenden korrigierten Dichteteilmesswerte $\rho_{\text{vorl,i}}$ für die Oszillatoren sollten im Wesentlichen übereinstimmen. Als korrigierter Dichtemesswert $\rho_{\text{corr}}$ kann dann ein, ggf. mit den jeweiligen Massedurchflussraten durch die Messrohre der Oszillatoren gewichteter Durchschnitt der beiden Dichteteilmesswerte $\rho_{\text{corr,i}}$ ausgegeben werden.

Mit dem erfindungsgemäßen Verfahren korrigierte Dichtemesswerte erreicht die um nicht mehr als 0,5 kg/m$^3$, insbesondere nicht mehr als 0,3 kg/m$^3$, insbesondere nicht mehr als 0,2 kg/m$^3$ von der tatsächlichen Dichte des Mediums abweichen.

Das in Fig. 4 dargestellte Ausführungsbeispiel eines erfindungsgemäßen Messumformers 10 umfasst einen äußeren Oszillator 12 mit zwei parallel geführten, gebogenen Messrohren 12a, 12b, und einen inneren Oszillator 14 mit zwei parallel geführten, gebogenen Messrohren 14a, 14b, wobei die Messrohre einlassseitig und auslassseitig jeweils in einen Sammler 18 münden, der einen Flansch 20 zur Montage des Messumformers 10 in eine Rohrleitung trägt. Die beiden Sammler 18 sind durch ein steifes Trägerrohr 16 miteinander verbunden.

Zum Anregen von Biegeschwingungen der Messrohre der Oszillatoren 12, 14 weist der Messumformer für jeden Oszillator jeweils einen hier nicht dargestellten elektrodynamischen Erreger auf, der zwischen den Messrohren des jeweiligen Oszillators wirkt. Zudem weist der Messaufnehmer für jeden Oszillator jeweils einen hier nicht dargestellten einlassseitigen und je einen auslassseitigen elektrodynamischen Schwingungssensor auf, um die Schwingungen der Messrohre des Oszillators zu erfassen. Einzelheiten dazu sind dem Fachmann grundsätzlich bekannt und beispielsweise in DE 10 2015 104 931 A1 näher erläutert.

Der erfindungsgemäße Messumformer umfasst weiterhin eine Mess- und Betriebsschaltung 32 mit einer Recheneinheit, um die Erreger zu treiben, Signale der Schwingungssensoren zu erfassen, und das erfindungsgemäße Verfahren durchzuführen.

**Patentansprüche**

1. Verfahren (100) zum Bestimmen eines Dichtemesswerts eines Mediums mittels eines in einer Rohrleitung montierten Coriolis-Massedurchflussmessumformers (10), welcher mindestens zwei Oszillatoren (12, 14) aufweist, die jeweils mindestens zwei gegeneinander schwingende Messrohre umfassen, wobei die Messrohre (12a, 12b) eines ersten der Oszillatoren oberhalb der Messrohre eines zweiten der Oszillatoren (14a, 14b) verlaufen, wobei die Messrohre (12a, 12b, 14a, 14b) strömungstechnisch parallel angeordnet sind und einlassseitig und auslassseitig in Sammler (18) münden, wobei durch die Montage des Messumformers in der Rohrleitung mechanische Spannungen verursacht sind, welche über die Sammler die Oszillatoren beeinflussen, wobei das Medium in den Messrohren geführt wird, wobei das Verfahren (100) die folgenden Schritte umfasst:

   (110) Anregen jeweils mindestens einer Schwingungsmode des ersten Oszillators und des zweiten Oszillators;
   (120) Ermitteln der jeweiligen Eigenfrequenz der angeregten Schwingungsmoden;
   (130) Ermitteln jeweils eines vorläufigen Dichtemesswerts auf Basis der jeweiligen Eigenfrequenzen;
   (140) Ermitteln einer Abweichung zwischen den vorläufigen Dichtemesswerten;
   (150) Ermitteln eines korrigierten Dichtemesswerts mittels eines Modells, welches auf Basis der Abweichung den Einfluss der mechanischen Spannungen auf die Dichtemessung ermittelt und korrigiert.

2. Verfahren nach Anspruch 1, wobei das Modell den Einfluss der mechanischen Spannungen in Form von Biegemomenten modelliert.

3. Verfahren nach Anspruch 2, wobei das Modell den Einfluss der Biegemomente auf die Oszillatoren unter der Annahme modelliert, dass die Biegemomente Achsen aufweisen, die senkrecht zu einer Längsachse des Messumformers verlaufen, und die in Richtung der Schwingungen der Oszillatoren verlaufen.

4. Verfahren nach Anspruch 2 oder 3, wobei ein effektiver Dichtemesswert als Mittelwert bzw. mit der jeweiligen Durchflussrate durch die Messrohre der Oszillatoren gewichteter Mittelwert der vorläufigen Dichtemesswerte ermittelt wird, wobei der korrigierte Dichtemesswert auf Basis des effektiven Dichtemesswerts und eines Korrekturterms ermittelt wird, der auf Basis der Abweichung ermittelt wird.

5. Verfahren nach Anspruch 2 oder 3, wobei der korrigierte Dichtemesswert auf Basis beider vorläufiger Dichtewerte und ihnen jeweils zugeordneten Korrekturtermen ermittelt wird, die auf Basis der Abweichung ermittelt werden.

6. Verfahren nach Anspruch 4 oder 5, wobei mindestens ein Korrekturterm ein Polynom der Abweichung umfasst, insbesondere ein Polynom ersten oder zweiten Grades.

7. Verfahren nach Anspruch 4, 5 oder 6, wobei mindestens ein Korrekturterm zum effektiven Dichtemesswert addiert wird.

8. Verfahren nach einem der vorhergehende n Ansprüche, wobei überprüft wird, ob das Medium einphasig ist, und wobei der Mittels des Modells korrigierte Dichtemesswert nur für einphasige Medien bestimmt wird.

9. Verfahren nach einem der vorhergehenden Ansprüche, wobei jeweils die erste Biegeschwingungsmode der Oszillatoren angeregt wird, und vorläufigen Dichtemesswerte auf Basis der Eigenfrequenzen dieser Biegeschwingungsmoden bestimmt werden.

10. Verfahren nach einem der vorhergehenden Ansprüche, wobei der korrigierte Dichtemesswert um nicht mehr als $0{,}5\ kg/m^3$, insbesondere nicht mehr als $0{,}3\ kg/m^3$, insbesondere nicht mehr als $0{,}2\ kg/m^3$ von der tatsächlichen Dichte des Mediums abweicht.

11. Coriolis-Massedurchflussmessumformer (10) zur Montage in eine Rohrleitung, umfassend:
    mindestens zwei Oszillatoren (12, 14), die jeweils mindestens zwei gegeneinander schwingfähige Messrohre (12a, 12b, 14a, 14b) umfassen, wobei im eingebauten Zustand die Messrohre (12a, 12b) eines ersten der Oszillatoren (12a) oberhalb der Messrohre (14a, 14b) eines zweiten der Oszillatoren (14) verlaufen, wobei die Messrohre (12a, 12b, 14a, 14b) strömungstechnisch parallel angeordnet sind und einlassseitig und auslassseitig in Sammler (18) münden, wobei die Montage des Messumformers in der Rohrleitung mechanische Spannungen verursachen kann, welche über die Sammler (18) die Oszillatoren (12, 14) beeinflussen, wobei die Messrohre (12a, 12b, 14a, 14b) zum Führen eines Mediums dienen, dessen Dichte mit dem Coriolis-Massedurchflussmessumformer (10) zu bestimmen ist, wobei der Coriolis-Massedurchflussmessumformer weiterhin eine Mess- und Betriebsschaltung mit Recheneinheit (32) aufweist, die dazu eingerichtet ist, das Verfahren nach einem der vorhergehenden Ansprüche mit dem Coriolis-Massedurchflussmessumformer durchzuführen.

## Claims

1. Method (100) for determining a measured density value of a medium by means of a Coriolis mass flow transducer (10) which is mounted in a pipeline and has at least two oscillators (12, 14) which each comprise at least two measuring tubes oscillating with respect to one another, the measuring tubes (12a, 12b) of a first of the oscillators running above the measuring tubes of a second of the oscillators (14a, 14b), wherein the measuring tubes (12a, 12b, 14a, 14b) are arranged in parallel in terms of flow and open into collectors (18) on the inlet side and outlet side, wherein the mounting of the transducer in the pipeline causes mechanical stresses which influence the oscillators via the collectors, wherein the medium is guided in the measuring tubes, wherein the method (100) comprises the following steps:

   (110) Excitation of at least one oscillation mode each of the first oscillator and the second oscillator;
   (120) Determine the respective natural frequency of the excited oscillation modes;
   (130) Determine a preliminary density measurement value based on the respective natural frequencies;
   (140) Determine a deviation between the preliminary density readings;
   (150) Determination of a corrected density measurement value by means of a model which determines and corrects the influence of the mechanical stresses on the density measurement on the basis of the deviation.

2. The method according to claim 1, wherein the model models the influence of the mechanical stresses in the form of bending moments.

3. The method according to claim 2, wherein the model models the influence of the bending moments on the oscillators under the assumption that the bending moments have axes which are perpendicular to a longitudinal axis of the transducer and which extend in the direction of the oscillations of the oscillators.

4. Method according to claim 2 or 3, wherein an effective density measurement value is determined as an average value or an average value, weighted with the respective flow rate through the measuring tubes of the oscillators, of the preliminary density measurement values, wherein the corrected density measurement value is determined on the basis of the effective density measurement value and a correction term which is determined on the basis of the deviation.

5. Method according to claim 2 or 3, wherein the corrected density measurement value is determined on the basis of both preliminary density values and correction terms assigned to them in each case, which are determined on the basis of the deviation.

6. Method according to claim 4 or 5, wherein at least one correction term comprises a polynomial of the deviation, in particular a polynomial of the first or second degree.

7. The method according to claim 4, 5 or 6, wherein at least one correction term is added to the effective density measurement value.

8. Method according to one of the preceding n claims, wherein it is checked whether the medium is single-phase, and wherein the density measurement value corrected by means of the model is determined only for single-phase media.

9. Method according to one of the preceding claims, wherein the first bending vibration mode of the oscillators is excited in each case, and preliminary density measurement values are determined on the basis of the natural frequencies of these bending vibration modes.

10. Method according to one of the preceding claims, wherein the corrected density measurement value does not deviate from the actual density of the medium by more than 0.5 kg/m$^3$, in particular not more than 0.3 kg/m$^3$, in particular not more than 0.2 kg/m$^3$.

11. Coriolis mass flow transmitter (10) for mounting in a pipeline, comprising:
    at least two oscillators (12, 14), which each comprise at least two measuring tubes (12a, 12b, 14a, 14b) capable of oscillating relative to one another, wherein in the installed state the measuring tubes (12a, 12b) of a first of the oscillators (12a) extend above the measuring tubes (14a, 14b) of a second of the oscillators (14), the measuring tubes (12a, 12b, 14a, 14b) being arranged in parallel in terms of flow and opening into collectors (18) on the inlet side and outlet side, the mounting of the transmitter in the pipeline being capable of causing mechanical stresses, which influence the oscillators (12, 14) via the collectors (18), wherein the measuring tubes (12a, 12b, 14a, 14b) serve to guide a medium whose density is to be determined with the Coriolis mass flow rate transmitter (10), wherein the Coriolis mass flow rate transmitter further comprises a measuring and operating circuit with computing unit (32) which is set up to carry out the method according to one of the preceding claims with the Coriolis mass flow rate transmitter.

## Revendications

1. Procédé (100) pour déterminer une valeur de mesure de densité d'un milieu au moyen d'un transducteur de débit massique Coriolis (10) monté dans une conduite, lequel présente au moins deux oscillateurs (12, 14) qui comprennent chacun au moins deux tubes de mesure oscillant l'un par rapport à l'autre, les tubes de mesure (12a, 12b) d'un premier des oscillateurs étant situés au-dessus des tubes de mesure d'un deuxième des oscillateurs (14a, 14b), les tubes de mesure (12a, 12b, 14a, 14b) étant disposés parallèlement du point de vue de la technique d'écoulement et débouchant dans des collecteurs (18) du côté de l'entrée et du côté de la sortie, le montage du transducteur de mesure dans la canalisation provoquant des tensions mécaniques qui influencent les oscillateurs par l'intermédiaire des collecteurs, le fluide étant guidé dans les tubes de mesure, le procédé (100) comprenant les étapes suivantes :

   (110) exciter respectivement au moins un mode d'oscillation du premier oscillateur et du deuxième oscillateur ;
   (120) déterminer la fréquence propre respective des modes d'oscillation excités ;
   (130) déterminer respectivement une valeur de mesure de densité provisoire sur la base des fréquences propres respectives ;
   (140) déterminer un écart entre les valeurs de mesure de densité provisoires ;
   (150) déterminer une valeur de mesure de densité corrigée au moyen d'un modèle qui, sur la base de l'écart, détermine et corrige l'influence des tensions mécaniques sur la mesure de densité.

2. Procédé selon la revendication 1, dans lequel le modèle modélise l'influence des contraintes mécaniques sous la forme de moments de flexion.

3. Procédé selon la revendication 2, dans lequel le modèle modélise l'influence des moments de flexion sur les oscillateurs en supposant que les moments de flexion ont des axes qui sont perpendiculaires à un axe longitudinal du transducteur et qui s'étendent dans la direction des oscillations des oscillateurs.

4. Procédé selon la revendication 2 ou 3, dans lequel une valeur de mesure de densité effective est déterminée en tant que valeur moyenne ou valeur moyenne pondérée par le débit respectif à travers les tubes de mesure des oscillateurs des valeurs de mesure de densité provisoires, la valeur de mesure de densité corrigée étant déterminée sur la base de la valeur de mesure de densité effective et d'un terme de correction qui est déterminé sur la base de l'écart.

5. Procédé selon la revendication 2 ou 3, dans lequel la valeur de mesure de densité corrigée est déterminée sur la base des deux valeurs de densité provisoires et des termes de correction qui leur sont respectivement associés et qui sont déterminés sur la base de l'écart.

6. Procédé selon la revendication 4 ou 5, dans lequel au moins un terme de correction comprend un polynôme de l'écart, en particulier un polynôme du premier ou du deuxième degré.

7. Procédé selon la revendication 4, 5 ou 6, dans lequel au moins un terme de correction est ajouté à la valeur de mesure de densité effective.

8. Procédé selon l'une des n revendications précédentes, dans lequel on vérifie si le milieu est monophasique et dans lequel la valeur de mesure de densité corrigée au moyen du modèle est déterminée uniquement pour des milieux monophasiques.

9. Procédé selon l'une quelconque des revendications précédentes, dans lequel on excite respectivement le premier mode de vibration de flexion des oscillateurs, et on détermine des valeurs de mesure de densité provisoires sur la base des fréquences propres de ces modes de vibration de flexion.

10. Procédé selon l'une quelconque des revendications précédentes, dans lequel la valeur de mesure de densité corrigée ne s'écarte pas de la densité réelle du milieu de plus de 0,5 kg/m³, en particulier de plus de 0,3 kg/m³, notamment de plus de 0,2 kg/m³.

11. Transmetteur de débit massique Coriolis (10) destiné à être monté dans une canalisation, comprenant :
au moins deux oscillateurs (12, 14) qui comprennent chacun au moins deux tubes de mesure (12a, 12b, 14a, 14b) pouvant osciller l'un par rapport à l'autre, dans lequel, à l'état monté, les tubes de mesure (12a, 12b) d'un premier des oscillateurs (12a) se trouvent au-dessus des tubes de mesure (14a, 14b) d'un deuxième des oscillateurs (14), les tubes de mesure (12a, 12b, 14a, 14b) étant disposés parallèlement du point de vue de la technique d'écoulement et débouchant dans des collecteurs (18) du côté de l'entrée et du côté de la sortie, le montage du transducteur dans la canalisation pouvant provoquer des tensions mécaniques, qui influencent les oscillateurs (12, 14) par l'intermédiaire des collecteurs (18), les tubes de mesure (12a, 12b, 14a, 14b) servant à conduire un fluide dont la densité doit être déterminée avec le transducteur de débit massique de Coriolis (10)le transducteur de débit massique de Coriolis présentant en outre un circuit de mesure et de fonctionnement avec une unité de calcul (32) qui est conçue pour mettre en oeuvre le procédé selon l'une des revendications précédentes avec le transducteur de débit massique de Coriolis.

Fig. 1

Fig. 2

<u>100</u>

110 — Anregen jeweils mindestens einer Schwingungsmode

120 — Ermitteln der jeweiligen Eigenfrequenz

130 — Ermitteln jeweils eines vorläufigen Dichtemesswerts

140 — Ermitteln einer Abweichung zwischen den vorläufigen Dichtemesswerten

150 — Ermitteln eines korrigierten Dichtemesswerts auf Basis der Abweichung

Fig. 3

14a
14b
12a
12b
<u>10</u>
20 18
16
18 20
32

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102015104931 A1
- DE 102018133318 A1
- DE 102016007905 A1
- DE 102016125616 A1
- WO 2020088837 A1
- DE 102018112002 A1